# EUROPEAN PATENT APPLICATION

(11) **EP 2 336 392 A1**
(43) Date of publication of application: **22.06.2011**
(21) Application number: 10188279.3
(22) Date of filing: 20.10.2010
(51) Int. Cl.: C23F 13/04, C23F 13/22, G01N 17/02

(54) **Cathodic protection monitoring**

(30) Priority: 30.11.2009 GB 0920878
(71) Applicant: Vetco Gray Controls Limited, Bristol BS48 1BS (GB)
(72) Inventor: Guo, Junxiang, Portishead Bristol BS20 7FB (GB); Lakin, Jonathan, Cheltenham, Gloucestershire GL52 8XE (GB); Okwun-Kalu, Nnanna, Baltic Wharf, Bristol BS1 6XX (GB)
(74) Representative: Emerson, Peter James

(57) **Abstract**

A method of monitoring cathodic protection of an item located underwater at a facility, the facility further including a processing means, comprises the steps of: providing a pair of first and second electrodes, the first electrode being electrically connected to the item and the second electrode being in contact with water proximate the item;
measuring the potential between the first and second electrodes;
producing an electrical signal indicative of the cathodic protection level;
converting the signal into a communications format compatible with the processing means and passing it to the processing means; and
transmitting the converted signal from the processing means to a surface location.

## Description

The present invention relates to a method of monitoring cathodic protection of an item located underwater at a facility and an underwater facility having an item requiring cathodic protection. In particular the invention is suitable for subsea hydrocarbon extraction facilities.

Metal items and surfaces which are deployed underwater, particularly subsea, are prone to corrosion, due to the electrolytic nature of the surrounding liquid. Such corrosion may result in underwater equipment failures with consequently significant costs of downtime and replacement.

A standard technique for reducing corrosion after deployment of underwater equipment is to use cathodic protection, commonly abbreviated to "CP". A widely-used form of CP is "galvanic anode CP", in which a sacrificial metal surface is positioned proximate to the metal item to be protected. A sacrificial metal material is chosen which has a greater magnitude electrochemical potential than the item to be protected. Commonly used sacrificial metal materials include alloys of zinc, magnesium and aluminium for example. When located subsea for example, the sacrificial metal material will be corroded preferentially to the item. Eventually, the sacrificial material will be corroded to such an extent that replacement of the sacrificial material is necessary.

The effectiveness of the CP, which is primarily dependent on the amount of corrodible sacrificial material remaining, may be monitored by measuring the potential between the metal item to be protected and the surrounding liquid, as is well-known in the art. For subsea CP for example, it is common to use silver chloride-based (AgCl) electrodes for this purpose. International standards are set which govern CP design, a current example being DNV-RP-B401. Currently, these standards recommend that effective corrosion protection of subsea equipment is not assumed until a potential of -0.8V (Ag|AgCl|seawater) across the system is attained. It is therefore necessary to monitor potentials on the equipment to ensure that the required level of CP is met.

In the subsea hydrocarbon extraction industry, currently available methods of subsea CP monitoring involve deploying remotely operated vehicles (ROVs) subsea to measure the CP potential periodically. This is a cost and time-intensive procedure, especially if the ROV is deployed solely for this purpose.

It is an aim of the present invention to overcome this problem and eliminate the current necessity for subsea intervention for CP monitoring. This aim is achieved by enabling the CP potential to be monitored from the surface, i.e. from a topside facility located onshore or on a vessel or rig. In this way the present invention provides remote condition monitoring and diagnostics for CP monitoring.

According to a first aspect of the present invention there is provided a method of monitoring cathodic protection of an item located underwater at a facility, the facility further including a processing means, comprising the steps of:
providing a pair of first and second electrodes, the first electrode being electrically connected to the item and the second electrode being in contact with water proximate the item;
measuring the potential between the first and second electrodes;
producing an electrical signal indicative of the cathodic protection level;
converting the signal into a communications format compatible with the processing means and passing it to the processing means; and
transmitting the converted signal from the processing means to a surface location.

In accordance with a second aspect of the present invention there is provided an underwater facility having an item requiring cathodic protection, comprising:
a pair of first and second electrodes, the first electrode being electrically connected to the item and the second electrode being in contact with water proximate the item;
means for measuring the potential between the first and second electrodes and
producing an electrical signal indicative of the cathodic protection level;
a transducer for converting the signal into a communications format compatible with the processing means;
a processing means;
means for passing the converted signal to the processing means; and
transmission means for transmitting the converted signal from the processing means to a surface location.

In accordance with a third aspect of the present invention there is provided an underwater hydrocarbon extraction facility according to the second aspect.

The present invention thereby provides, inter alia, the following advantages: instantaneous and real-time monitoring of the level of CP is achievable;
the invention may be fitted to otherwise standard underwater equipment, for example a subsea electronics module of a subsea well structure;
overprotection or underprotection of equipment can be quickly detected and rectified; and
the costs associated with ROV intervention are eliminated.

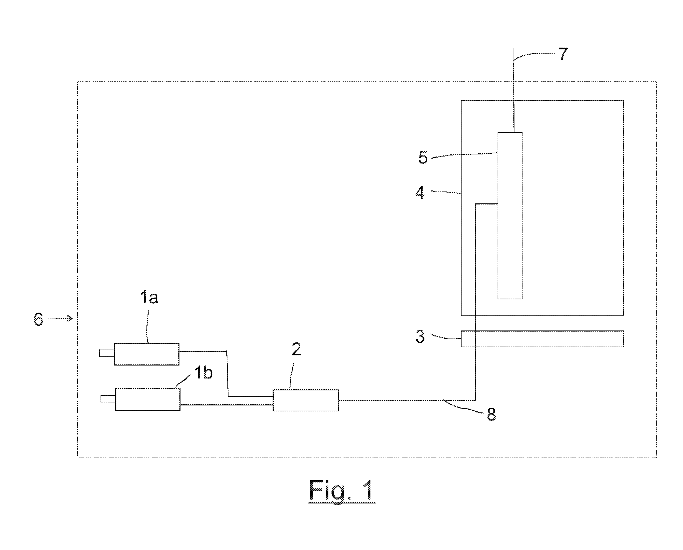

The invention will now be described with reference to the accompanying Fig. 1, which schematically shows a subsea well structure in accordance with an embodiment of the invention.

Fig. 1 shows a diagrammatic representation of a subsea well structure 6, in this embodiment a subsea well tree of a hydrocarbon extraction facility, enabling monitoring of the CP in accordance with the present invention.

A pair of reference electrodes 1a and 1b are fitted to the structure, such that the first electrode 1a is electrically connected to the item to be protected, and the second electrode is positioned in contact with the water proximate the item. Here, the term "proximate" is used to denote water which is close enough to the item to enable a useful CP indication to be obtained, such distances being known in the art. These electrodes enable the measurement of the electrical potential (known as the "CP potential") between the item and the surrounding seawater. The electrodes 1a, 1b may for example be zinc-based, or other materials as is known in the art, e.g. silver chloride. An electrical signal indicative of the cathodic protection level is thereby produced by the electrodes.

The potential is fed to a transducer 2, containing electronics, which converts the potential to a 4-20 mA interface. This interface can be any communications format, for example CANbus, Profibus or Modbus, which is compatible with, and can be interpreted by the processing means 5 of the structure 6 (see below). In other words, the potential is transformed into a signal compatible with the communication protocol employed by the processing means 3.

The converted signal is then transmitted, via cables 8, through a subsea control module mounting base (SCMMB) 3, and passed to processing means 5, in this case a subsea electronics module (SEM). The SEM 5 is typically located within a subsea control module (SCM) 4.

The data is then transmitted from the SEM 5 to a surface location, for example topside facilities such as a master control station (MCS). A line 7 is used for this transmission. Line 7 comprises an existing line within an umbilical cable (not shown) linking the subsea facility and the surface as is known in the art, so that the existing communication system between the SEM 5 and topside may be employed to transfer the data to the MCS. Once there, the data may be interpreted and displayed to a subsea equipment operator.

Various alternatives and modifications within the scope of the invention will be apparent to those skilled in the art. For example, the invention may be applied to any other underwater structures under CP, for example umbilical termination assemblies, subsea distribution units (SDUs), manifolds, etc.

Multiple measuring points, using electrode pairs spaced about the structure, are also possible. In this case, each electrode pair may be linked to a network bus, connected to the SEM. The use of multiple measuring points enables the effectiveness of the CP to be monitored in a variety of locations about the structure. Typically, these locations would be selected for the level of criticality to the facility.

The CP may be monitored either continuously or intermittently as required.

## Claims

1. A method of monitoring cathodic protection of an item located underwater at a facility, the facility further including a processing means, comprising the steps of:
providing a pair of first and second electrodes, the first electrode being electrically connected to the item and the second electrode being in contact with water proximate the item;
measuring the potential between the first and second electrodes;
producing an electrical signal indicative of the cathodic protection level;
converting the signal into a communications format compatible with the processing means and passing it to the processing means; and
transmitting the converted signal from the processing means to a surface location.

2. A method according to claim 1, wherein the underwater facility comprises an underwater hydrocarbon extraction facility.

3. A method according to claim 2, wherein the converted signal is transmitted to a surface location along an umbilical cable.

4. A method according to either of claims 2 and 3, wherein the processing means comprises a subsea electronics module.

5. A method according to any preceding claim, wherein the communications format compatible with the processing means comprises CANbus.

6. A method according to any of claims 1 to 4, wherein the communications format compatible with the processing means comprises profibus.

7. A method according to any of claims 1 to 4, wherein the communications format compatible with the processing means comprises modbus.

8. A method according to any preceding claim, comprising the steps of:
providing at least one additional pair of first and second electrodes, the first electrode being electrically connected to an item at a different location the first electrode of the first pair and the second electrode being in contact with water proximate the item;
measuring the potential between the first and second electrodes of the additional pair;
producing an electrical signal indicative of the cathodic protection level;
converting the signal into a communications format compatible with the processing means and passing it to the processing means.

9. A method according to claim 8, wherein the signal is passed to the processing means on a network bus.

10. An underwater facility having an item requiring cathodic protection, comprising:
a pair of first and second electrodes, the first electrode being electrically connected to the item and the second electrode being in contact with water proximate the item;
means for measuring the potential between the first and second electrodes and
producing an electrical signal indicative of the cathodic protection level;
a transducer for converting the signal into a communications format compatible with the processing means;
a processing means;
means for passing the converted signal to the processing means; and
transmission means for transmitting the converted signal from the processing means to a surface location.

11. An underwater hydrocarbon extraction facility according to claim 10.

12. An extraction facility according to claim 11, wherein the transmission means comprises an umbilical cable.

13. An extraction facility according to either of claims 11 and 12, wherein the processing means comprises a subsea electronics module.

14. An extraction facility according to any of claims 11 to 13, wherein the transducer converts the signal to a CANbus format.

15. An extraction facility according to any of claims 11 to 13, wherein the transducer converts the signal to a profibus format.

16. An extraction facility according to any of claims 11 to 13, wherein the transducer converts the signal to a modbus format.

17. An underwater facility according to any of claims 10 to 16, comprising at least one additional pair of first and second electrodes.

18. An underwater facility according to claim 17, comprising a network bus connecting each electrode pair and the processing means.
